# FASCICULE DE BREVET EUROPEEN

(11) **EP 1 702 832 B1**
(45) Date de publication et mention de la délivrance du brevet: **12.09.2007**
(21) Numéro de dépôt: 06300239.8
(22) Date de dépôt: 16.03.2006
(51) Int. Cl.: B62D 21/15, B62D 29/00

(54) **Longeron et structure de véhicule automobile comportant de tels longerons**
Längsträger und Struktur eines Kraftfahrzeuges mit so einem Längsträger
Longitudinal beam and structure of a motor vehicle with such a beam

(30) Priorité: 18.03.2005 FR 0550711
(43) Date de publication de la demande: 20.09.2006
(73) Titulaire: Peugeot Citroën Automobiles, 78140 Vélizy-Villacoublay (FR)
(72) Inventeur: Perrot, Philippe, 25200 Montbelliard (FR)

(56) Documents cités:
- DE-A1- 10 248 846
- DE-A1- 19 638 904
- US-A1- 2004 075 265
- US-B1- 6 258 465

## Description

L'invention se rapporte à un longeron ainsi qu'à une structure de véhicule comportant de tels longerons.

L'invention concerne plus particulièrement un longeron constitué d'une pièce tubulaire comprenant des moyens de renfort contre les chocs.

On appelle longeron, les éléments de structure longitudinaux disposés de chaque côté d'un véhicule. Les longerons sont en général constitués de poutres métalliques et sont reliées par des traverses pour constituer la partie inférieure de la caisse du véhicule. Les longerons forment également des supports pour des éléments verticaux de structure tels que des montants ou pieds délimitant des encadrements de portes.

Pour garantir la tenue d'un véhicule aux chocs latéraux, il est connu d'augmenter l'épaisseur des pièces de la structure et de disposer des renforts structuraux. En particulier, dans le cas de véhicules automobiles comportant des pieds dit "milieu" raccordés aux longerons, il est connu de disposer des pièces de renforcement dans le pied milieu et sur le longeron. Les pièces de renforcement sont en générale constituées de feuilles de tôles qui créent une surépaisseur localisée de l'élément de structure à l'endroit où l'on souhaite augmenter les caractéristiques de résistance.

Cette solution augmente cependant le nombre de pièces utilisées ainsi que la masse de la caisse du véhicule. Par ailleurs, cette solution a pour conséquence de concentrer les efforts et déformations à des endroits adjacents aux renforts localisés. En particulier, les portes d'un véhicule de ce type sont susceptibles de subir des efforts très importants et une déformation rapide en cas de choc latéral.

Un exemple de l'état de la technique est divulgué par DE 10248846; ce document montre un insert de renfort d'un longeron de véhicule.

Un but de la présente invention est de pallier tout ou partie des inconvénients de l'art antérieur relevés ci-dessus.

A cette fin, le longeron selon l'invention, par ailleurs conforme à la définition générique qu'en donne le préambule ci-dessus, est essentiellement caractérisé en ce que les moyens de renfort comportent au moins une cloison transversale disposée à l'intérieur du corps du longeron, la ou les cloisons transversales s'étendant sur au moins une partie de la longueur du longeron.

Par ailleurs, l'invention peut comporter l'une ou plusieurs des caractéristiques suivantes.
- la au moins une cloison transversale est solidaire d'une poutre disposée à l'intérieur du longeron,
- la poutre comporte deux parois extérieures longitudinales opposées et sensiblement parallèles,
- la poutre comporte au moins deux cloisons transversales sensiblement perpendiculaires,
- la poutre comporte une pluralité de cloisons sensiblement parallèles,
- la poutre est rendue solidaire du longeron au niveau de l'une au moins de ses extrémités,

L'invention concerne également une structure de véhicule comportant de tels longerons. A cet effet, la structure de véhicule automobile selon l'invention comporte deux longerons délimitant un plancher, les longerons étant conformes à l'une quelconque des caractéristiques précédentes.

Selon d'autres particularités :
- la structure comporte au moins une poutre horizontale formant une traverse de siège, la ou les traverses étant disposées de façon sensiblement perpendiculaire aux longerons et étant rendues solidaire par une de leurs extrémités d'un longeron,
- chaque longeron forme le support d'au moins une poutre verticale, chaque poutre étant reliée au longeron par l'une de ses extrémités.

D'autres particularités et avantages apparaîtront à la lecture de la description ci-après, faite en référence aux figures dans lesquelles :
- la figure 1 représente une vue en perspective et schématique d'une structure ou caisse de véhicule,
- la figure 2 représente une vue en perspective et schématique d'un détail de la figure 1, illustrant l'agencement d'un longeron selon l'invention au sein de la structure,
- la figure 3 représente une vue en coupe transversale et schématique d'un détail de la figure 1, illustrant l'agencement d'un longeron et d'une porte de véhicule,
- la figure 4 représente une vue de dessus et schématique d'un longeron selon l'invention illustrant une répartition des efforts lorsque le longeron est soumis à un choc transversal,
- les figures 5 à 7 illustrent respectivement trois exemples de section d'une poutre de renforcement disposée dans le longeron selon l'invention.

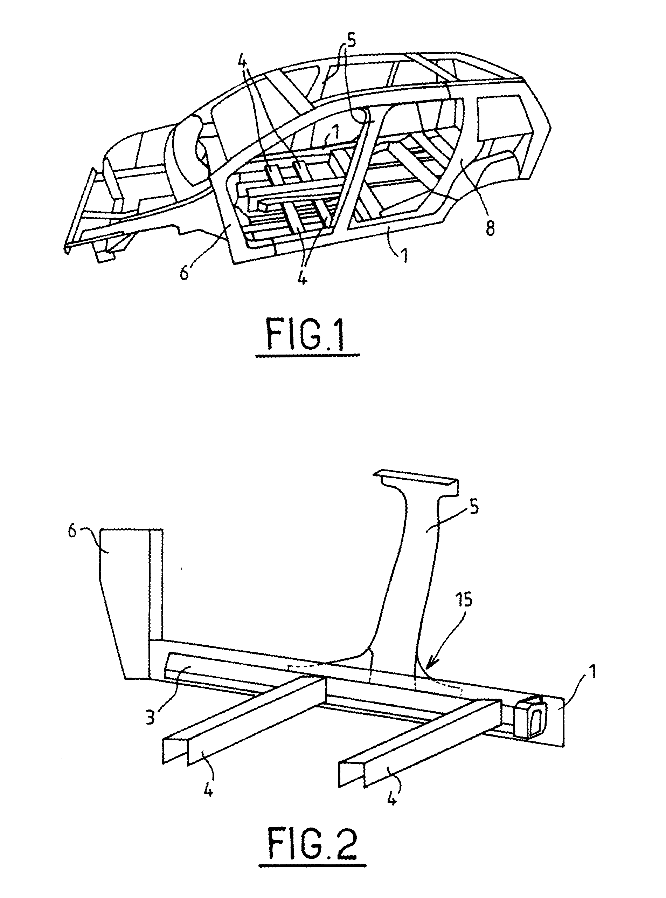

La figure 1 représente schématiquement un exemple de structure de véhicule comprenant classiquement, de chaque côté du véhicule, un longeron 1 s'étendant horizontalement selon la direction longitudinale du véhicule, et un pied milieu 5 s'étendant verticalement à partir du longeron 1. La structure comprend également de chaque côté du véhicule, un pied 6 dit "avant" s'étendant sensiblement verticalement à partir de l'extrémité avant du longeron 1. Des traverses destinées à former un plancher du véhicule relient les deux longerons 1. En particulier, des traverses 4 de sièges sont prévues pour former des supports pour les armatures de sièges.

Selon l'invention, au moins un des deux longerons 1 et de préférence chaque longeron 1 comporte en son sein au moins une cloison 2, 12 transversale de renforcement.

De préférence la ou les cloisons 2, 12 transversales disposées à l'intérieur du corps du longeron 1 s'étendant sur sensiblement toute la longueur du longeron 1.

La ou les cloisons 2, 12 sont prévues pour créer une inertie dans le longeron 1 de façon que, lorsque le longeron 1 est soumis à un choc, celui-ci répartit ses efforts de façon équilibrée sur sa longueur et donc notamment vers le pied milieu 5 et les traverse 4 de siège adjacents. La ou les cloisons 2, 12 transversales permettent une déformation répartie du longeron 1. La déformation du longeron 1 ne se concentre ainsi plus dans sa partie centrale comme c'était le cas dans l'art antérieur.

La répartition équilibrée des efforts lors d'un choc sur le longeron 1 est schématisée par une pluralité de flèches de même dimension à la figure 4.

Avantageusement, la ou les cloisons 2, 12 transversales sont solidaires d'une poutre 3 disposée à l'intérieur du longeron 1. Plus précisément, les cloisons 2, 12 transversales peuvent être disposées à l'intérieur du corps tubulaire de la poutre 3. De préférence, les cloisons 2, 12 sont situées dans des plans parallèles à la direction longitudinale de la poutre 3 et sont perpendiculaires à l'une au moins des parois 13 de la poutre 3 auxquelles elles sont reliées.

Les figures 5 à 7 illustrent trois exemples non limitatifs de poutres 3 comportant au moins une cloison 2, 12 transversale de renforcement.

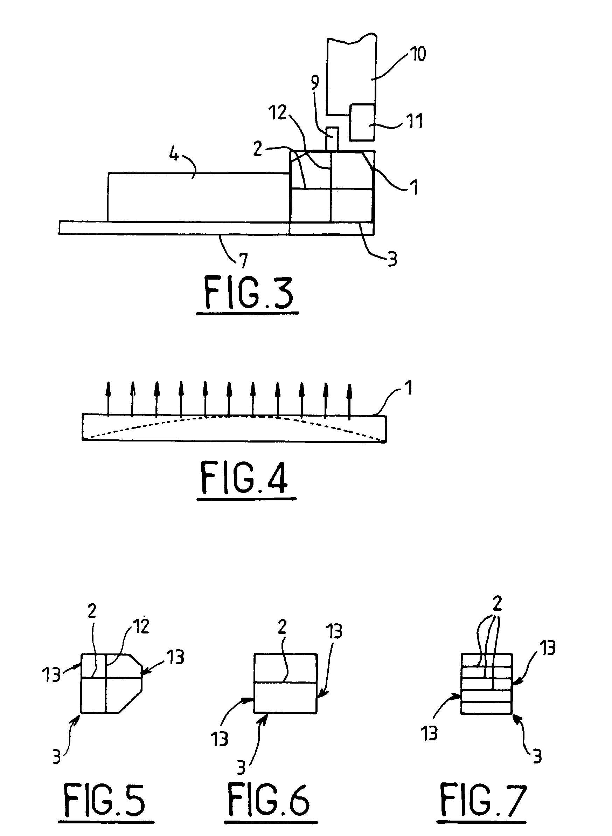

La poutre 3 tubulaire peut, par exemple, avoir une section hexagonale (figure 5), carrée (figure 6) ou parallélépipédique (figure 7). La poutre 3 peut contenir une cloison 2 transversale (figure 6) ou plusieurs cloisons 2 transversales parallèles (figure 7) ou deux cloison 2, 12 transversales perpendiculaires formant en section une croix (figure 5). Bien entendu tout autre type d'agencement ou combinaison des caractéristiques ci-dessus peut être envisagé.

De préférence, la ou les cloisons 2, 12 forment des compartiments à l'intérieur de la poutre 3.

De plus, lorsque le longeron 1 est monté sur la structure, au moins une cloison 2 est située dans un plan perpendiculaire ou parallèle au plan horizontal du plancher de la structure.

Comme représenté à la figure 3, la poutre 3 est disposée à l'intérieur du longeron 1. De préférence, la poutre 3 a des dimensions transverses permettant son emboîtement stable dans le longeron 1.

La poutre 3 peut être constituée, par exemple, d'un profilé en acier ou en aluminium. Les extrémités de la poutre 3 sont bloquées dans le longeron 1 par exemple par des inserts structuraux expansibles en cataphorèse, tel que de la mousse structurelle époxy formée sur un support ou une armature en polyamide du "type 6-6" chargée en fibre de verre. Les extrémités de la poutre 3 peuvent également être bloquées dans le longeron 1 par des cloisons rapportées par des rivets ou par soudure laser par transparence. La fixation de la poutre 3 au longeron 1 est réalisée au moins d'un côté de la poutre 3.

De préférence la poutre 3 est fixée par ses deux extrémités au longeron 1 pour assurer une meilleure cohérence de la structure, en vue notamment du raccordement aux pieds avant 6 et arrière 8.

La figure 3 illustre l'agencement d'une traverse 4 de siège reliée à un longeron au dessus d'un plancher 7. Une feuillure 9 de longeron 1 fait saillie de la partie supérieure du longeron 1 pour raccordement avec une structure de porte 10 comportant en partie inférieure un renfort 11.

La figure 2 illustre plus en détail un exemple d'agencement d'un pied milieu 5 sur un longeron 1.

Par soucis de simplification le longeron 1 est représenté partiellement. Plus précisément, le longeron 1 est représenté par une seule paroi dite "intérieure". Deux traverses 4 de siège et un pied 6 avant sont raccordées au longeron 1. Un pied milieu 5 est également raccordé à la partie centrale du longeron 1. Plus précisément, le pied 5 est raccordé à la poutre 3 par l'intermédiaire d'une pièce 15 de raccordement et de renforcement évasée qui est soudée sur la poutre 3 et/ou sur le corps du longeron 1. C'est à dire que les parois du longeron 1 sont rapportées sur le raccordement du pied 5, 15 à la poutre 3.

De préférence, le longeron 1 possède un recouvrement, c'est-à-dire une forme de talon qui permet d'éviter l'échappement de la porte, celle-ci résistera en effet par une feuillure de serti. La porte 10 possède un raidisseur 11 inférieur. La structure ainsi créée possède une résistance aux chocs plus efficace qu'avec un longeron classique. En particulier, l'invention réduit le risque d'échappement de la porte 10, c'est-à-dire le passage du bas de porte 10 au dessus du longeron 1.

L'invention permet, en cas de choc latéral sur le véhicule, de solliciter le pied milieu 5 et les traverses 4 de siège de manière presque uniforme, permettant ainsi d'éviter une sollicitation trop rapide et trop prononcée des portes du véhicule.

L'invention permet, en effet, une déformation du longeron 1 sensiblement de même nature que les poutres de pare-chocs avant de véhicules de type connu. En cas de choc, le longeron 1 selon l'invention consomme plus d'énergie qu'un longeron traditionnel.

Grâce à l'invention il est ainsi possible d'utiliser pour le longeron et/ou la poutre 3, un tube en acier ou en aluminium d'épaisseur relativement faible. Ainsi, pour une masse équivalente, l'invention améliore la résistance aux chocs du véhicule et la sécurité des passagers.

L'invention permet également de diminuer notablement le nombre de doublures et renforts de la structure.

## Revendications

1. Longeron (1) de véhicule automobile constitué d'une pièce tubulaire et comprenant des moyens de renfort contre les chocs, les moyens de renfort comportent au moins une cloison (2, 12) transversale disposée à l'intérieur du corps du longeron (1) et solidaire d'une poutre (3) disposée à l'intérieur du longeron (1), la ou les cloisons (2) transversales s'étendant sur au moins une partie de la longueur du longeron, **caractérisé en ce que** la poutre (3) est rendue solidaire du longeron (1) au niveau de l'une au moins de ses extrémités.

2. Longeron (1) selon la revendication 1, **caractérisé en ce que** la poutre (3) comporte deux parois (13) extérieures longitudinales opposées et sensiblement parallèles.

3. Longeron (1) selon l'une quelconque des revendications 1 et 2, **caractérisé en ce que** la poutre (3) comporte au moins deux cloisons (2, 12) transversales sensiblement perpendiculaires.

4. Longeron (1) selon l'une quelconque des revendications 1 à 3, **caractérisé en ce que** la poutre (3) comporte une pluralité de cloisons (2) sensiblement parallèles.

5. Structure de véhicule automobile comportant deux longerons (1) délimitant un plancher (7), **caractérisé en ce que** les longerons (1) sont conformes à l'une quelconque des revendications précédentes.

6. Structure selon la revendication 5, **caractérisé en ce qu**'elle comporte au moins une poutre horizontale formant une traverse (4) de siège, la ou les traverses (4) étant disposées de façon sensiblement perpendiculaire aux longerons (1) et étant rendues solidaire par une de leurs extrémités d'un longeron (1).

7. Structure selon la revendication 5 ou 6, **caractérisé en ce que** chaque longeron (1) forme le support d'au moins une poutre verticale (5, 6), chaque poutre (5, 6) étant reliée au longeron (1) par l'une de ses extrémités.

## Claims

1. Motor vehicle longitudinal side rail (1) consisting of a tubular component and comprising means for strengthening it against impacts, the strengthening means comprising at least one transverse partition (2, 12) positioned inside the body of the longitudinal side rail (1) and secured to a beam (3) positioned inside the longitudinal side rail (1), the transverse partition or partitions (2) extending over at least part of the length of the longitudinal side rail, **characterized in that** the beam (3) is secured to the longitudinal side rail (1) at least at one of its ends.

2. Longitudinal side rail (1) according to Claim 1, **characterized in that** the beam (3) comprises two opposed and substantially parallel longitudinal external walls (13).

3. Longitudinal side rail (1) according to either one of Claims 1 and 2, **characterized in that** the beam (3) comprises at least two substantially perpendicular transverse partitions (2, 12).

4. Longitudinal side rail (1) according to any one of Claims 1 to 3, **characterized in that** the beam (3) comprises a plurality of substantially parallel partitions (2).

5. Motor vehicle structure comprising two longitudinal side rails (1) delimiting a floor (7), **characterized in that** the longitudinal side rails (1) are in accordance with any one of the preceding claims.

6. Structure according to Claim 5, **characterized in that** it comprises at least one horizontal beam forming a seat crossmember (4), the crossmember or crossmembers (4) being positioned substantially perpendicular to the longitudinal side rails (1) and secured to a longitudinal side rail (1) by one of its/their ends.

7. Structure according to Claim 5 or 6, **characterized in that** each longitudinal side rail (1) forms the support for at least one vertical beam (5, 6), each beam (5, 6) being connected to the longitudinal side rail (1) by one of its ends.

## Patentansprüche

1. Längsträger (1) eines Kraftfahrzeugs, der aus einem rohrförmigen Bauteil besteht und Verstärkungsmittel gegen Stöße aufweist, wobei die Verstärkungsmittel mindestens eine Quertrennwand (2, 12) aufweisen, die im Inneren des Körpers des Längsträgers (1) angeordnet und fest mit einem Balken (3) verbunden ist, der im Inneren des Längsträgers (1) angeordnet ist, wobei die Quertrennwand oder die Quertrennwände (2) sich über mindestens einen Teil der Länge des Längsträgers erstrecken, **dadurch gekennzeichnet, dass** der Balken (3) in Höhe mindestens eines seiner Enden fest mit dem Längsträger (1) verbunden wird.

2. Längsträger (1) nach Anspruch 1, **dadurch gekennzeichnet, dass** der Balken (3) zwei entgegengesetzte und im Wesentlichen parallele äußere Längswände (13) aufweist.

3. Längsträger (1) nach einem der Ansprüche 1 und 2, **dadurch gekennzeichnet, dass** der Balken (3) mindestens zwei im Wesentlichen lotrechte Quertrennwände (2, 12) aufweist.

4. Längsträger (1) nach einem der Ansprüche 1 bis 3, **dadurch gekennzeichnet, dass** der Balken (3) mehrere im Wesentlichen parallele Trennwände (2) aufweist.

5. Kraftfahrzeugstruktur, die zwei Längsträger (1) aufweist, die einen Boden (7) begrenzen, **dadurch gekennzeichnet, dass** die Längsträger (1) einem der vorhergehenden Ansprüche entsprechen.

6. Struktur nach Anspruch 5, **dadurch gekennzeichnet, dass** sie mindestens einen waagrechten Balken aufweist, der einen Sitz-Querträger (4) bildet, wobei der oder die Querträger (4) im Wesentlichen lotrecht zu den Längsträgern (1) angeordnet und über eines ihrer Enden fest mit einem Längsträger (1) verbunden sind.

7. Struktur nach Anspruch 5 oder 6, **dadurch gekennzeichnet, dass** jeder Längsträger (1) die Unterlage für mindestens einen senkrechten Balken (5, 6) bildet, wobei jeder Balken (5, 6) über eines seiner Enden mit dem Längsträger (1) verbunden ist.
